(19) Europäisches Patentamt / European Patent Office / Office européen des brevets

(11) **EP 4 170 306 B1**

## (12) EUROPEAN PATENT SPECIFICATION

(45) Date of publication and mention
of the grant of the patent:
**18.12.2024 Bulletin 2024/51**

(21) Application number: **21203547.1**

(22) Date of filing: **19.10.2021**

(51) International Patent Classification (IPC):
**G01K 17/10** (2006.01)  **G01D 4/00** (2006.01)
**G08C 19/00** (2006.01)  **G01F 1/00** (2022.01)
**G01K 13/02** (2021.01)  **G01K 7/16** (2006.01)

(52) Cooperative Patent Classification (CPC):
**G01K 17/10; G01K 7/16; G01K 13/02; G08C 19/00**

(54) **SEPARABLE COMPONENT OF A THERMAL ENERGY METER AND METHOD FOR DETERMINING A CONSUMPTION OF THERMAL ENERGY**

TRENNBARE KOMPONENTE EINES THERMISCHEN ENERGIEZÄHLERS UND METHODE ZUR ERMITTLUNG EINES THERMISCHEN ENERGIEVERBRAUCHS

COMPOSANT SÉPARABLE D'UN COMPTEUR D'ÉNERGIE THERMIQUE ET PROCÉDÉ DE DÉTERMINATION D'UNE CONSOMMATION D'ÉNERGIE THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2023 Bulletin 2023/17**

(73) Proprietor: **Kamstrup A/S**
**8660 Skanderborg (DK)**

(72) Inventors:
• **Jensen, Mads Erik Lund**
**8660 Skanderborg (DK)**
• **Jensen, Allan**
**8660 Skanderborg (DK)**

(74) Representative: **Patentanwälte Hemmer Lindfeld Frese**
**Partnerschaft mbB**
**Wallstraße 33a**
**23560 Lübeck (DE)**

(56) References cited:
**US-A1- 2014 241 399**

• **KAMSTRUP A/S: "Technical description - Multical 803", 22 March 2019 (2019-03-22), XP055693341, Retrieved from the Internet <URL:https://stockshed.uk/files/kamstrup/MULTICAL%20803%20-%20Technical%20Description%20-%20Stockshed.pdf> [retrieved on 20200508]**

**Description**

TECHNICAL FIELD

The present disclosure is directed to a separable component of a thermal energy meter, and a method for determining a consumption of thermal energy meter. In particular, the present disclosure relates to split type thermal energy meters and separable components thereof.

BACKGROUND

Thermal energy meters are typically installed by utility providers at consumer sites of a district heating/cooling system to determine consumption of thermal energy for billing the respective consumer site. They can be used as heat meters or as cooling meters depending on whether the thermal energy is provided as heating energy or as cooling energy. The thermal energy is typically provided by a heated or chilled fluid flowing through a pipe to a consumer element, e.g. a heat exchanger. Usually, the fluid delivers the thermal energy in a supply line of the district heating/cooling system to the consumer element and returns with less/more thermal energy in a return line of the district heating/cooling system.

In order to determine the consumed thermal energy over a certain period of time, a thermal energy meter needs to measure, continuously or regularly over said consumption period the fluid flow, the temperature upstream of the consumer element, and the temperature downstream of the consumer element. The following formula may be applied:

$$Q = \int_{t=0}^{t=\tau} A \cdot v \cdot \rho \cdot c_w \cdot \left(T_f - T_r\right) dt$$

wherein Q is the consumed energy over the time period $\tau$, $A$ is the pipe cross section where the fluid velocity v is measured, $\rho$ is the fluid density, $c_w$ is the specific heat capacity of the fluid, $T_f$ is the fluid temperature in the feed line, and $T_r$ is the fluid temperature in the return line. The fluid flow can be denoted by $V = A \cdot v$. The consumed energy Q may be a positive value for supplying heating energy and a negative value for supplying cooling energy.

Therefore, a thermal energy meter typically comprises the following components: a flow sensor, two temperature sensors and a calculator. The flow sensor may be arranged at the supply line or the return line, i.e. upstream or downstream of the consumer element. One of the temperature sensors may be arranged at the supply line while the other one of the temperature sensors may be arranged at the return line. The calculator may receive the measurements from the flow sensor and the temperature sensors to determine the consumed thermal energy. It should be noted that modern thermal energy meters are preferably battery powered and equipped with a signal transmitter for sending consumption data wirelessly to a head-end system (HES) of the utility provider for billing purposes. Therefore, it is a general goal to minimise the electric power consumption of a thermal energy meter.

As explained in EP 2 994 724 B1, consumption meters that are used for billing purposes are subject to regulatory demands. Such regulatory demands may be demands to the precision and reliability of the measurements. Regulatory demands require that meters are individually tested, verified and certified according to national or international regulations before customers can be billed based on a measured consumed amount.

There are two types of thermal energy meters on the market. The first type is an integral type thermal energy meter and the second type is a split type thermal energy meter. Components of an integral type thermal energy meter cannot be separated from other components of the integral type thermal energy meter without a re-verification and re-certification of authorities. Therefore, the components are either integrated into a single unit as much as possible and/or connected by a fixed cable connection without plugs. The advantage of integral type thermal energy meters is that it can be assured that the components operate and communicate with each other most efficiently and reliably. Their disadvantage is that they cannot be adapted to a wide range of application scenarios, e.g. when longer or shorter cables are needed. Furthermore, individual components of integral type thermal energy meters cannot be exchanged.

In order to provide more flexibility for the use in different application scenarios and to allow exchange of individual components, split type thermal energy meters comprise at least one separable and exchangeable component. For example, the flow meter and/or one or both of the temperature sensors may be releasably connectable by a plug-in cable to the calculator. An example for a separable component of a split type thermal energy meter in form of a calculator is the product "Multical® 803" of Kamstrup.

As the separable components of a split type thermal energy meter may be sold on the market as individual products, e.g. as spare parts, authorities certify the components individually and independent from the rest of the components of the split type thermal energy meter. This means that a component to be certified must show that it operates reliably with acceptable precision with split type thermal energy components of other manufacturers. Therefore, known split type thermal energy meters provide standardised interfaces and use a standardised communication mode to achieve authoritative approval. However, standardised interfaces and a standardised communication mode limit significantly the options and optimisation potential of how the components of a split type thermal energy meter operate and communicate with each other. The HARTO communication protocol as described in US 2014/0241399 A1 is not suitable for communication among individually certified components of a split type thermal energy meter and does not improve the operational efficiency.

It is therefore the object of the present invention to provide a thermal energy meter that complies with authoritative regulations while providing the flexibility of a split type thermal energy meter in terms of different application scenarios and exchange of individual components on the one hand, and providing the operational efficiency and communication capacity of an integral type thermal energy meter on the other hand.

SUMMARY

According to the invention, a separable component of a thermal energy meter is provided for determining consumption of thermal energy provided by a fluid flow through a pipe. The component comprises a communication interface and is releasably connectable by cable to another component of the thermal energy meter, wherein the communication interface is configured to selectively communicate with said other component in a default communication mode and an advanced communication mode, wherein the communication interface is configured to start communicating with said other component in the default communication mode, and to automatically attempt, at least once or regularly, to switch from the default communication mode to the advanced communication mode, and- to automatically switch back to the default communication mode if communication in the advanced communication mode is faulty. It should be noted that the term "separable component" in the context of the present disclosure shall include any component that is releasably connected by cable to at least one other component of the thermal energy meter. A separable component may still be non-releasably connected by cable to yet other components or may integrate them.

The idea is thus that the communication interface of the component to be certified is able to use selectively one of two communication modes, i.e. a default communication mode and an advanced communication mode. The default communication mode may, for instance, be a standardised analogue pulsed signal mode for the component to be able to work with other components of another manufacturer. The advanced communication mode may be a proprietary digital serial communication mode that allows a higher data resolution und thus more information exchange at lower energy consumption. In case the other component of the thermal energy meter is not able to communicate in the advanced communication mode, the components may use the default communication mode. However, in case the other component of the thermal energy meter is able to communicate in the advanced communication mode, the components may use the advanced communication mode. It should be noted that the default communication mode and/or the advanced communication mode may depend on the type of the other component. So, the default communication mode and/or the advanced communi-

nication mode between a calculator and a flow sensor may differ from the default communication mode and/or the advanced communication mode between the calculator and one or more of the temperature sensors.

The communication interface may be implemented into the separable component by hardware and/or software. For example, the communication interface may comprise two different physical connectors, e. g. sockets, which can be selectively used to connect the component by cable to another component. A cable may be used with two different corresponding connectors, e. g. plugs, at the same end to be selectively used to connect the components with each other. An installation person may thus manually select the communication mode by choosing among the available options of different physical connectors.

More preferably, the communication interface may comprise a single physical connector, e.g. a socket, to be used for both the default communication mode and the advanced communication mode. In this case, the communication interface may comprise a switch in form of hardware and/or software to switch between the default communication mode and the advanced communication mode. The switch may be switchable by manual human intervention and/or automatically by a software trigger. In particular, switching may be automatically triggered by receiving a certain signal and/or certain data from the other component via the communication interface. So, one component may command the other connected component to switch the communication mode if possible. In other words, the communication interface of the component may preferably be configured to receive from another connected component a command to switch the communication mode and/or to send a command to another connected component to switch the communication mode if possible.

Optionally, the component may be one of the group comprising:

- a flow sensor being installable at a pipe for determining a fluid flow,
- a temperature sensor being installable at a pipe for determining a fluid temperature, and
- a calculator being configured to receive and process measurement values from a flow sensor and/or temperature sensor for determining thermal energy consumption.

The component may preferably be either a flow sensor or a calculator, so that the flow sensor can offer selectively communicating with the calculator in a default communication mode and an advanced communication mode and/or the calculator can offer selectively communicating with the flow sensor in a default communication mode and an advanced communication mode.

According to the present invention, the communication interface is configured to start communicating with the other component in the default communication mode. This is a safe harbour approach to reliably initiate a communication with the other component that may or may not be able to communicate in the advanced communication mode. It can be expected that any certified component is able to communicate at least in the default communication mode, though. Thereby, it is guaranteed that the thermal energy meter is always operational independent of whether another component of another manufacturer is connected. Authoritative approval may thus be achieved for certification.

Furthermore, the communication interface is configured to automatically attempt, at least once or regularly, to switch from the default communication mode to the advanced communication mode. This is useful to check at least once or regularly if the other component is able to communicate in the advanced communication mode, because the advanced communication mode is the preferred communication mode to achieve a higher data resolution and to optimise electric power consumption.

Furthermore, the communication interface is configured to automatically switch back to the default communication mode if communication in the advanced communication mode is faulty. So, the default communication mode may be the preferred fallback solution if the advanced communication mode is faulty in order to ensure a reliable operation. This improves the reliability of the thermal energy meter.

Optionally, the communication interface may be configured to automatically check, at least once or regularly, by a handshake mechanism if communication in the advanced communication mode is faultless. A successful handshake response from the other component may indicate that the advanced communication mode is faultless. Analogously, a faulty or missing handshake response from the other component may indicate that the advanced communication mode is faulty. In the default communication mode, the handshake may be a pre-defined voltage sequence as a response to indicate availability of communicating in the advanced communication mode. In the advanced communication mode, the handshake may be a pre-defined digital bit sequence as a response to confirm a faultless communication in the advanced communication mode.

Optionally, the default communication mode may be a preferably standardised analogue pulsed signal mode and the advanced communication mode may be a preferably proprietary digital serial communication mode. The digital serial communication mode may be a specific modulation of the signal in the analogue pulsed signal mode. For instance, a certain analogue voltage for a certain minimum time period in the analogue pulsed signal mode may be interpreted as a trigger signal for the other connected component to switch to the advanced communication mode. The communication interface may comprise a universal asynchronous receiver-transmitter (UART) in order to exchange data bits in the advanced communication mode. The connected components may request and send data in the advanced communication mode. The digital serial communication mode is preferably proprietary in the sense that only components of the same manufacturer are configured to successfully communicate with each other. The digital serial communication mode may thus comprise authentication bits in order to authenticate original components of a manufacturer.

Preferably, the separable component is a calculator of a thermal energy meter, wherein the calculator is configured to receive and process measurement values from a flow sensor, a first temperature sensor and a second temperature sensor. Optionally, one of the first temperature sensor and the second temperature sensor may be integrated into the calculator, and the other one of the first temperature sensor and the second temperature sensor may be releasably connectable by cable to the calculator.

It is particularly advantageous to integrate at least one temperature sensor into the calculator if the calculator is installable at the fluid line and capable of communicating with the other temperature sensor in the advanced communication mode. Alternatively, or in addition, if the separable component is a flow sensor, at least one temperature sensor may be integrated into the flow sensor. One or more of the temperature sensors may be integrated into or have the functionality of one or more of a pressure sensor, a vibration sensor, or an acoustic sensor.

Typically, using analogue resistance sensors as temperature sensors, for instance platinum temperature sensors with temperature-dependent electric resistance and 500 Ohms (PT500) or 100 Ohms (PT100) reference resistance at 0 °C, requires using the same cable lengths for both temperature sensors, because the cable significantly adds electric resistance depending on the cable length. It is, however, often desirable to be able to be flexible in using longer or shorter cables for at least one of the temperature sensors depending on the operation scenario.

This can be solved by using digital temperature sensors that are capable of using the advanced communication mode to transfer temperature data in digital bits to the calculator, because the cable length would not affect the digital data. Thus, one of the digital temperature sensors can be easily integrated into the calculator while the other temperature sensor can be connected by a cable of any desired length.

In an embodiment, a thermal energy meter is provided comprising at least two different of the separable components described above. The thermal energy meter is thus a split type thermal energy meter. However, not all components of the thermal energy meter must be separable from the another one of the components. For instance, the flow sensor may be separable from the calculator while at least one of the temperature sensors may be integrated into or connected by a fixed cable connection to the calculator and/or the flow sensor.

According to the invention, a method is provided for determining consumption of thermal energy provided by a fluid flow through a pipe using of a thermal energy meter, the method comprising:

- releasably connecting by cable a separable first component of the thermal energy meter to a second component of the thermal energy meter, and
- selectively communicating between the first component and the second component in a default communication mode and an advanced communication mode, wherein the communication interface is configured- to start communicating with said other component in the default communication mode, and-to automatically attempt, at least once or regularly, to switch from the default communication mode to the advanced communication mode, and- to automatically switch back to the default communication mode if communication in the advanced communication mode is faulty.

Optionally, the first component and the second component may be two of the group comprising:

- a flow sensor being installable at a pipe for determining a fluid flow,
- a temperature sensor being installable at a pipe for determining a fluid temperature, and
- a calculator being configured to receive and process measurement values from a flow sensor and/or temperature sensor for determining thermal energy consumption.

It should be noted that the other one of the above-identified group and/or another temperature sensor may be non-separable components of the thermal energy meter, i.e. integrated or with a fix connection.

According to the present invention, the method comprises starting communicating with the other component in the default communication.

Furthermore, the method comprises automatically attempting, at least once or regularly, to switch from the default communication mode to the advanced communication mode. Since there is in general a risk of data loss, e.g. when pulses are not registered, each time an attempt to switch to advanced mode it may be preferable to attempt the switch, exclusively or in addition, when it is triggered by a certain event that is preferably linked to installation action of the thermal energy meter or of at least one of the separable components. Such an event may for example be:

- powering up,
- closing of a housing of one of the components,
- a pressing of a button,
- applying a tool e.g. a configuration tool or wireless reading tool, and/or
- manual intervening or action.

Most preferably, an attempt to switch from the default communication mode to the advanced communication mode is made in case of such an event and then only very rarely on a regular basis to save electric energy consumption of the thermal energy meter.

Furthermore, the method comprises automatically switching back to the default communication mode if communication in the advanced communication mode is faulty.

Optionally, the method may further comprise automatically checking, at least once or regularly, by a handshake mechanism if communication in the advanced communication mode is faultless.

Optionally, the default communication mode may be a preferably standardised analogue pulsed signal mode and the advanced communication mode may be a preferably proprietary digital serial communication mode.

SUMMARY OF THE DRAWINGS

Embodiments of the present invention will now be described by way of example with reference to the following figures of which:

Fig. 1 shows schematically an example of an embodiment of a thermal energy meter according to the present invention;

Figs. 2a-f show schematically different examples of embodiments of a thermal energy meter according to the present invention; and

Fig. 3 shows schematically an example of a communication sequence between two separable components of an embodiment of a thermal energy meter according to the present invention.

DETAILED DESCRIPTION

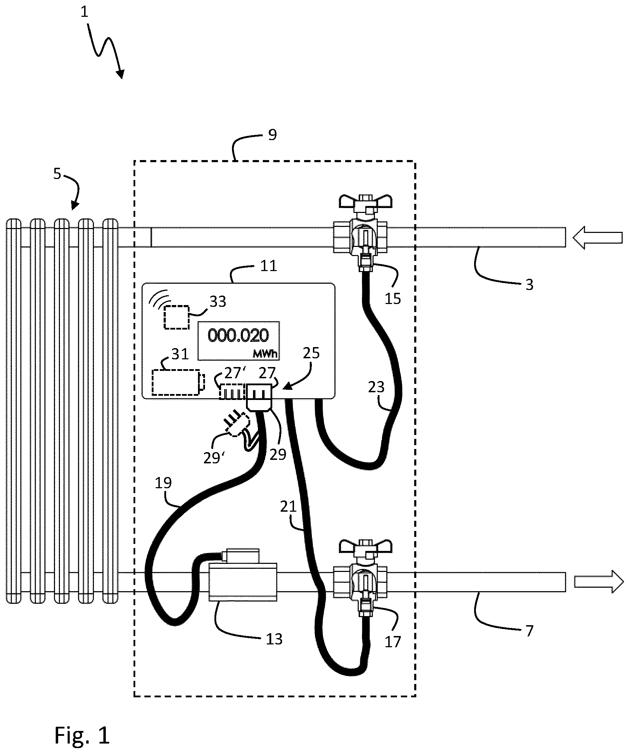

Fig. 1 shows a consumer site 1 of a district heating system of a utility provider. The district heating system comprises a feed line 3 delivering a flow of hot fluid, e.g. water, towards a thermal energy consumer 5, e.g. in form of a heat exchanger, radiator, or other type of thermal energy consumer. After deploying the thermal energy at the thermal energy consumer 5, the fluid returns with lower temperature via a return line 7 towards a remote heat source (not shown) of the district heating system. It should be noted that, in case of a district cooling system, the fluid returns with higher temperature via a return line 7 towards a remote cooling source (not shown) of the district cooling system.

In order to determine the consumed thermal energy at the consumer site 1, a thermal energy meter 9 in form of a heat meter is installed at the consumer site 1. It should be noted that, in case of a district cooling system, the thermal energy meter 9 may be a cooling meter. The thermal energy meter 9 comprises the following components: a calculator 11, a flow sensor 13, a first temperature sensor 15, and a second temperature sensor 17. The flow sensor 13 is here installed at the return line 7 to measure a fluid flow $\dot{V}$ through the return line 7. Alternatively, the flow sensor 13 could be installed at the feed line 3. The first temperature sensor 15 is installed at the feed line 3 to measure the feed line temperature $T_f$ of the fluid. The second temperature sensor 17 is installed at the return line 7 to measure the return line temperature $T_r$ of the fluid. The calculator 11 is configured to receive the measurements of the fluid flow $\dot{V}$ and the temperatures $T_f$ and $T_r$ in order to determine a consumed thermal energy Q over a period of time $\tau$ according to the formula:

$$Q = \int_{t=0}^{t=\tau} \dot{V} \cdot \rho \cdot c_w \cdot \left(T_f - T_r\right) dt$$

, wherein $\rho$ is the known fluid density and $c_w$ is the known specific heat capacity of the fluid.

In the embodiment of Fig. 1, the components 11, 13, 15, 17 are all individual units. There are three cables 19, 21, 23, of which a first cable 19 connects the flow sensor 13 with the calculator 11, a second cable 21 connects the first temperature sensor 15 with the calculator 11, and a third cable 23 connects the second temperature sensor 17 with the calculator 11. In this embodiment, the second cable 21 and the third cable 23 are both fixed at both ends to the respective component 11, 15, 17. So, each of the temperature sensors 15, 17 is here non-releasably connected to the calculator 11 or non-separable from it. However, in another embodiment, one or both of the temperature sensors 15, 17 could be a separable component being releasably connected to the calculator 11.

The calculator 11 is, however, in the embodiment of Fig. 1 a separable component of the thermal energy meter 9, because the first cable 19 between the flow sensor 13 and the calculator 11 is releasable by means of a connector 25 in form of screw terminals or a socket 27 and a plug 29. This implies that the flow sensor 13 is also a separable component of the thermal energy meter 9. The first cable 19 is here a fixed part of the flow sensor 13, i.e. the first cable 19 is not releasable from the flow sensor 13. Alternatively, the first cable 19 could be a fixed part of the calculator 11 and releasably connectable to the flow sensor 13 or the first cable 19 could be releasably connectable to both the calculator 11 and the flow sensor 13.

The calculator 11 is here powered by a battery 31 and comprises a signal transmitter 33 to communicate wirelessly energy consumption data to a head-end system (HES) of a utility provider for billing purposes. Alternatively, or in addition, the calculator 11 may be powered by a mains connection. In general, and in particular in case of a battery-powered calculator 11, there is a goal to optimise the electric power consumption of the thermal energy meter 9 to be able to guarantee a maximum lifetime of several years without the need to exchange or charge the battery 31.

In the embodiment of Fig. 1, the invention lies in the communication interface between the two separable components, i.e. the calculator 11 and the flow sensor 13. Either the calculator 11 may be a separable component according to the present invention or the flow sensor 13, or both.

If the calculator 11 is a separable component according to the present invention, it comprises a communication interface that is configured to selectively communicate with the flow sensor 13 in a default communication mode and an advanced communication mode. The communication interface may be implemented into the calculator 11 by hardware and/or software. For example, as shown in Fig. 1, the communication interface of calculator 11 may comprise a second socket 27' to be used for communicating in the advanced communication mode, whereas the socket 27 is a default socket for communicating in the default communication mode. As an alternative to a second socket 27', the communication interface of calculator 11 may comprise a software switch for the socket 27 to be used selectively for both communicating in the advanced communication mode and in the default communication mode. The switch may be manually switchable by human intervention or automatically by a software trigger.

If the flow sensor 13 is a separable component according to the present invention, it comprises a communication interface that is configured to selectively communicate with the calculator 11 in a default communication mode and an advanced communication mode. The communication interface may be implemented into the flow sensor 11 by hardware and/or software. For example, as shown in Fig. 1, the communication interface of the flow sensor 13 may comprise a second plug 29' to be used for communicating in the advanced communication mode, whereas the plug 29 is a default plug for communicating in the default communication mode. As an alternative to a second plug 29', the communication interface of the flow sensor 13 may comprise a software switch for the plug 29 to be used selectively for both communicating in the advanced communication mode and in the default communication mode. The switch may be manually switchable by human intervention or automatically by a software trigger.

It should be noted that the first cable 19 could be a fixed part of the calculator 11 comprising two selectable plugs at the flow sensor end as communication interface. Correspondingly, the flow sensor 13 could comprise two selectable sockets as a communication interface.

It is important to understand that the separable component according to the present invention, i.e. here the calculator 11 and/or the flow sensor 13, is operable even if the other separable component does not comprise a corresponding communication interface, i.e. if it is not a separable component according to the present invention. For instance, if the flow sensor 13 is an ordinary flow sensor having a cable 19 without a second plug 29' and/or without the ability to communicate in the advanced communication mode, e.g. a flow sensor 13 of another manufacturer, the thermal energy meter 9 would still be operable and verified by authorities, because the plug 29 would match the socket 27 of the calculator 11 and they can communicate in the default communication mode. In this case, the second socket 27' and/or the ability of the calculator 11 to communicate in the advanced communication mode is simply not used.

Vice versa, in case the flow sensor 13 has a communication interface with two plugs 29, 29' and/or with the ability to selectively communicate in the default communication mode and in the advanced communication mode, while the calculator 11 is an ordinary calculator having no corresponding communication interface, i.e. no second socket 27' and/or the ability to communicate in the advanced communication, the second plug 29' and/or the ability of the flow sensor 13 to communicate in the advanced communication mode is simply not used.

However, when both separable components, i. e. here the calculator 11 and the flow sensor 13, have corresponding communication interfaces according to the present invention, they can use the preferred advanced communication mode in order to increase the data resolution and to optimise the electric power consumption. So, an installation person may choose to connect the flow sensor 13 to the calculator 11 by plugging the second plug 29' into the second socket 27' and/or switch the communication mode to the advanced communication mode. Alternatively, in case of a software switch, there may no human intervention be needed if one or both communication interfaces automatically recognise being connected to a corresponding communication interface or automatically try or query if there is a corresponding communication interface connected. The default communication mode is used to begin the first communication and as a fallback communication mode if the advanced communication mode is faulty for some reason.

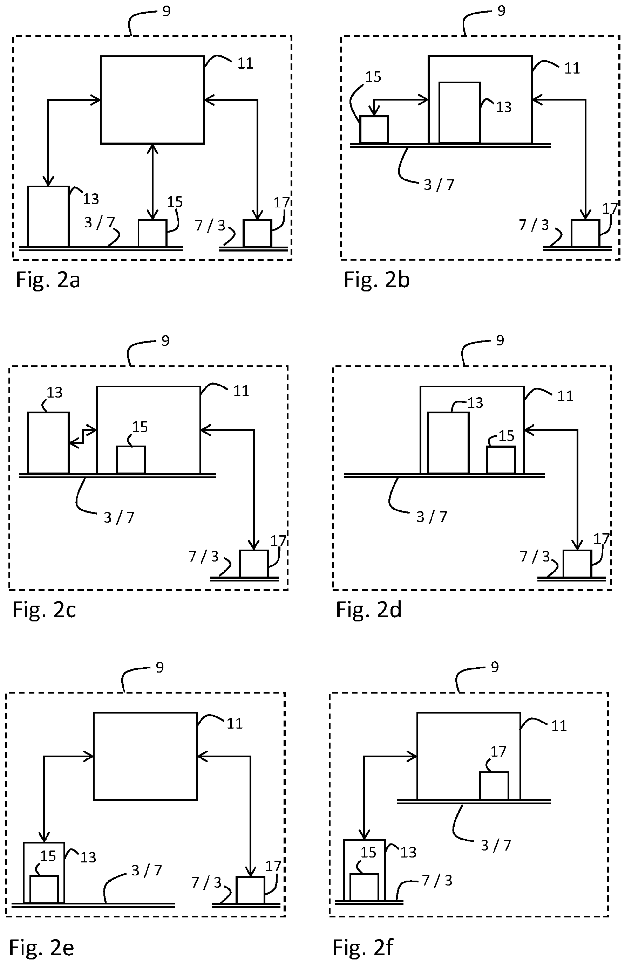

Figs. 2a-f show different embodiments of a thermal energy meter 9. Fig. 2a corresponds to the embodiment shown in Fig. 1, in which all four components, i.e. the calculator 11, the flow sensor 13, the first temperature sensor 15, and the second temperature sensor 17, are individual units. It should be noted that the flow sensor 11 could be installed at the feed line 3 or at the return line 7. In Fig. 2b, the flow sensor 13 and the calculator 11 form a common unit. That common unit and/or at least one of the temperature sensors 15, 17 is here a separable component with a communication interface according to the present invention. In Fig. 2c, the first temperature sensor 15 is integrated into the calculator 11 to form a common unit. That common unit and the flow sensor 13 and/or the second temperature sensor 17 is here a separable component with a communication interface according to the present invention. In Fig. 2d, both the flow sensor 13 and the first temperature sensor 15 form common unit with the calculator 11. That common unit and/or the second temperature sensor 17 is here a separable component with a communication interface according to the present invention. In Fig. 2e, the first temperature sensor 15 is integrated into the flow sensor 13 to form a common unit. The calculator 11 and/or that common unit is here a separable component with a communication interface according to the present invention. In addition, or alternatively, the calculator 11 and/or the second temperature sensor 17 is here a separable component with a communication interface according to the present invention. In Fig. 2f, the first temperature sensor 15 is integrated into the flow sensor 13 to form a first common unit, and the second temperature sensor 17 is integrated into the calculator 11 to form a second common unit. That first common unit and/or that second common unit is here a separable component with a communication interface according to the present invention. It should be noted for the Figs. 2a-f that the first temperature sensor 15 is installed at the feed line 3 or at the return line 7, while the second temperature sensor 17 is installed at the other one of the feed line 3 and the return line 7.

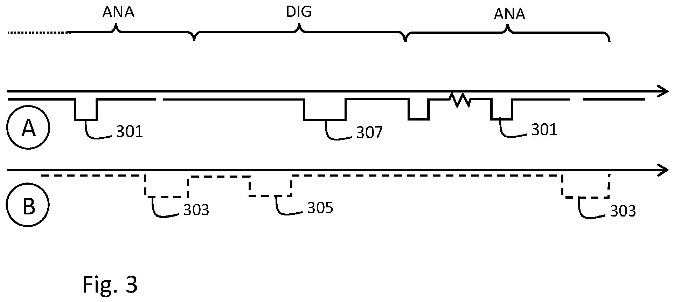

Fig. 3 shows a bi-directional communication sequence along a timeline between a pair of two separable components with automatic switching between communication modes. Sequence A (solid line) shows signal pulses 301 that a separable flow sensor 13 sends to a separable calculator 11. Sequence B (dashed line) shows signals 303 that the separable calculator 11 sends to the separable flow sensor 13. The flow sensor 13 starts the communication in the default communication mode ANA by sending analogue signal pulses 301 indicative of the measured fluid flow. It is not shown in Fig. 3 that the calculator 11 simultaneously receives digital or analogue temperature information from the temperature sensors 15, 17. The calculator 11 receives and processes the signal pulses 301 to determine the thermal energy consumption.

The calculator 11 is configured to check or query if the flow meter 13 is capable of communicating in the advanced communication mode. For example, the calculator 11 may hold the line low by signal 303 for a period of several analogue pulses. This is a trigger for the flow sensor 13 to open up a communication window in the advanced communication mode DIG. During this window, the flow sensor 13 buffers the flow measurements. The calculator 11 then uses the communication window to send a request in the advanced communication mode DIG in form of a digital data bit sequence 305 to the flow sensor 13. The flow sensor 13 responds to the request by digital data bit sequence 307. The response 307 may contain demanded information and/or a simple acknowledge signal. The demanded information may, inter alia, comprise digital information about the buffered flow measurements.

The digital data bit sequences 305, 307 may be part of a handshake mechanism that gives a feedback to the calculator 11 that the connected separable component is capable of communicating in the advanced communication mode.

After termination of the communication window in the advanced communication mode DIG, the flow sensor 13 switches back to the default communication mode and sends the buffered flow measurements and new analogue pulses 301. The calculator 11 may later initiate a new communication window DIG by analogue signal 303. Alternatively, a digital request to extend the window in the advanced communication mode DIG could be part of the digital data bit sequence 305. If the sequence 305 is regularly repeated after reception of data and/or an acknowledge signal, the window in the advanced communication mode DIG can be extended an arbitrary number of times, such that it may be open effectively continuously. The buffered flow measurements and more information can thus be continuously transmitted in digital response sequence 307 in the advanced communication mode DIG with optimised electric power consumption. If either the flow sensor 13 does not receive a new sequence 305 and/or the calculator 11 does not receive data or acknowledge sequence 307 in a faultless way, both components automatically switch back to the default communication mode of sending/receiving analogue signal pulses 301. After a failed or closed DIG window, a minimum delay to try opening another DIG window by a new request 303 is useful to limit the electric power for repeatedly unsuccessful attempts. A pre-determined maximum number of attempts may be useful to stop futile attempts. This is particularly useful if the connected component does not comprise a communication interface that is capable of communicating in the advanced communication mode.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure.

List of reference numerals:

| | |
|---|---|
| 1 | consumer site |
| 3 | feed line |
| 5 | energy consumer |
| 7 | return line |
| 9 | thermal energy meter |

| | |
|---|---|
| 11 | calculator |
| 13 | flow sensor |
| 15 | first temperature sensor |
| 17 | second temperature sensor |
| 19 | first cable |
| 21 | second cable |
| 23 | third cable |
| 25 | connector |
| 27 | socket |
| 27' | second socket |
| 29 | plug |
| 29' | second plug |
| 31 | battery |
| 33 | signal transmitter |
| 301 | analogue signal pulse |
| 303 | analogue request signal |
| 305 | digital sequence |
| 307 | digital data or acknowledge sequence |
| ANA | default communication mode |
| DIG | advanced communication mode |

**Claims**

1. A separable component (11, 13, 15, 17) of a thermal energy meter (9) for determining consumption of thermal energy provided by a fluid flow through a pipe (3, 7), wherein the separable component (11, 13, 15, 17) comprises a communication interface and is releasably connectable by cable (19, 21, 23) to another component (11, 13, 15, 17) of the thermal energy meter (9),

   **characterised in that** the communication interface is configured to selectively communicate with said other component (11, 13, 15, 17) in a default communication mode (ANA) and an advanced communication mode (DIG), wherein the communication interface is configured

   - to start communicating with said other component (11, 13, 15, 17) in the default communication mode (ANA), and
   - to automatically attempt, at least once or regularly, to switch from the default communication mode (ANA) to the advanced communication mode (DIG), and
   - to automatically switch back to the default communication mode (ANA) if communication in the advanced communication mode (DIG) is faulty.

2. The separable component (11, 13, 15, 17) according to claim 1, wherein the separable component (11, 13, 15, 17) is one of a group comprising:

   - a flow sensor (13) being installable at a pipe (3, 7) for determining a fluid flow,
   - a temperature sensor (15, 17) being installable at a pipe (3, 7) for determining a fluid temperature, and
- a calculator (11) being configured to receive and process measurement values from a flow sensor (13) and/or temperature sensor (15, 17) for determining thermal energy consumption.

3. The separable component (11, 13, 15, 17) according to any of the preceding claims, wherein the communication interface is configured to automatically check, at least once or regularly, by a handshake mechanism (305, 307) if communication in the advanced communication mode (DIG) is faultless.

4. The separable component (11, 13, 15, 17) according to any of the preceding claims, wherein the default communication mode (ANA) is an analogue pulsed signal mode and the advanced communication mode (DIG) is a digital serial communication mode.

5. The separable component (11) according to any of the preceding claims, wherein the separable component is a calculator (11) of a thermal energy meter (9), the calculator (11) being configured to receive and process measurement values from other components (13, 15, 17) of the thermal energy meter (9), the other components being a flow sensor (13), a first temperature sensor (15) and a second temperature sensor (17).

6. A thermal energy meter (9) comprising at least two different separable components (11, 13, 15, 17) according to any of the preceding claims.

7. A method for determining a consumption of thermal energy provided by a fluid flow through a pipe (3, 7) using of a thermal energy meter (9), the method comprising:

   - releasably connecting by cable (19, 21, 23) a separable first component (11, 13, 15, 17) of the thermal energy meter (9) to a second separable component (11, 13, 15, 17) of the thermal energy meter (9), and
   - selectively communicating between the first component (11, 13, 15, 17) and the second component (11, 13, 15, 17) in a default communication mode (ANA) and an advanced communication mode (DIG),
   - starting communicating between the first component (11, 13, 15, 17) and the second component (11, 13, 15, 17) in the default communication (ANA),
   - automatically attempting, at least once or regularly, to switch from the default communication mode (ANA) to the advanced communication mode (DIG), and
   - automatically switching back to the default communication mode (ANA) if communication in the advanced communication mode (DIG) is faulty.

8. The method according to claim 7, wherein the first component (11, 13, 15, 17) and the second component (11, 13, 15, 17) are two of the group comprising:

   - a flow sensor (13) being installable at a pipe (3, 7) for determining a fluid flow,
   - a temperature sensor (15, 17) being installable at a pipe (3, 7) for determining a fluid temperature, and
   - a calculator (11) being configured to receive and process measurement values from a flow sensor (13) and/or temperature sensor (15, 17) for determining thermal energy consumption.

9. The method according to claim 7 or 8, further comprising automatically checking, at least once or regularly, by a handshake mechanism (305, 307) if communication in the advanced communication mode (DIG) is faultless.

10. The method according to any of the claims 7 to 9, wherein the default communication mode (ANA) is an analogue pulsed signal mode and the advanced communication mode (DIG) is a digital serial communication mode.

**Patentansprüche**

1. Abtrennbare Komponente (11, 13, 15, 17) eines Wärmeenergiezählers (9) zum Bestimmen des Verbrauchs von Wärmeenergie, die durch einen Fluidstrom durch ein Rohr (3, 7) bereitgestellt wird, wobei die abtrennbare Komponente (11, 13, 15, 17) eine Kommunikationsschnittstelle aufweist und durch ein Kabel (19, 21, 23) lösbar an eine andere Komponente (11, 13, 15, 17) des Wärmeenergiezählers (9) angeschlossen werden kann,
**dadurch gekennzeichnet, dass** die Kommunikationsschnittstelle eingerichtet ist, um selektiv in einem Standardkommunikationsmodus (ANA) und in einem erweiterten Kommunikationsmodus (DIG) mit der anderen Komponente (11, 13, 15, 17) zu kommunizieren, wobei die Kommunikationsschnittstelle eingerichtet ist, um

   - die Kommunikation mit der anderen Komponente (11, 13, 15, 17) in dem Standardkommunikationsmodus (ANA) zu beginnen und
   - automatisch wenigstens einmal oder regelmäßig zu versuchen, von dem Standardkommunikationsmodus (ANA) zu dem erweiterten Kommunikationsmodus (DIG) zu wechseln, und
   - automatisch zu dem Standardkommunikationsmodus (ANA) zurückzuwechseln, wenn die Kommunikation in dem erweiterten Kommunikationsmodus (DIG) fehlerhaft ist.

2. Abtrennbare Komponente (11, 13, 15, 17) nach Anspruch 1, wobei die abtrennbare Komponente (11, 13, 15, 17) eine aus einer Gruppe ist, die

    - einen Durchflusssensor (13), der an einem Rohr (3, 7) installiert werden kann, um einen Fluidstrom zu bestimmen;
    - einen Temperatursensor (15, 17), der an einem Rohr (3, 7) installiert werden kann, um eine Fluidtemperatur zu bestimmen, und
    - einen Rechner (11), der eingerichtet ist, um Messwerte von einem Durchflusssensor (13) und/oder einem Temperatursensor (15, 17) zu erhalten und zu verarbeiten, um den Wärmeenergieverbrauch zu bestimmen,

umfasst.

3. Abtrennbare Komponente (11, 13, 15, 17) nach einem der vorhergehenden Ansprüche, wobei die Kommunikationsschnittstelle eingerichtet ist, um durch einen Handshake-Mechanismus (305, 307) automatisch wenigstens einmal oder regelmäßig zu prüfen, ob die Kommunikation in dem erweiterten Kommunikationsmodus (DIG) fehlerfrei ist.

4. Abtrennbare Komponente (11, 13, 15, 17) nach einem der vorhergehenden Ansprüche, wobei der Standardkommunikationsmodus (ANA) ein analoger Impulssignalmodus ist und der erweiterte Kommunikationsmodus (DIG) ein digitaler serieller Kommunikationsmodus ist.

5. Abtrennbare Komponente (11) nach einem der vorhergehenden Ansprüche, wobei die abtrennbare Komponente ein Rechner (11) eines Wärmeenergiezählers (9) ist, wobei der Rechner (11) eingerichtet ist, um Messwerte von anderen Komponenten (13, 15, 17) des Wärmeenergiezählers (9) zu erhalten und zu verarbeiten, wobei die anderen Komponenten ein Durchflusssensor (13), ein erster Temperatursensor (15) und ein zweiter Temperatursensor (17) sind.

6. Wärmeenergiezähler (9), aufweisend wenigstes zwei abtrennbare Komponenten (11, 13, 15, 17) nach einem der vorhergehenden Ansprüche.

7. Verfahren zum Bestimmen des Verbrauchs von Wärmeenergie, die durch einen Fluidstrom durch ein Rohr (3, 7) bereitgestellt wird, unter Verwendung eines Wärmeenergiezählers (9), wobei das Verfahren

    - ein lösbares Anschließen einer abtrennbaren ersten Komponente (11, 13, 15, 17) des Wärmeenergiezählers (9) durch ein Kabel (19, 21, 23) an eine zweite abtrennbare Komponente (11, 13, 15, 17) des Wärmeenergiezählers (9) und
    - ein selektives Kommunizieren zwischen der ersten Komponente (11, 13, 15, 17) und der zweiten Komponente (11, 13, 15, 17) in einem Standardkommunikationsmodus (ANA) und einem erweiterten Kommunikationsmodus (DIG),
    - ein Beginnen der Kommunikation zwischen der ersten Komponente (11, 13, 15, 17) und der zweiten Komponente (11, 13, 15, 17) mit der Standardkommunikation (ANA),
    - ein automatisches wenigstens einmaliges oder regelmäßiges Versuchen, von dem Standardkommunikationsmodus (ANA) zu dem erweiterten Kommunikationsmodus (DIG) zu wechseln, und
    - ein automatisches Zurückwechseln zu dem Standardkommunikationsmodus (ANA), wenn die Kommunikation in dem erweiterten Kommunikationsmodus (DIG) fehlerhaft ist,

umfasst.

8. Verfahren nach Anspruch 7, wobei die erste Komponente (11, 13, 15, 17) und die zweite Komponente (11, 13, 15, 17) zwei aus der Gruppe sind, die

    - einen Durchflusssensor (13), der an einem Rohr (3, 7) installiert werden kann, um einen Fluidstrom zu bestimmen;
    - einen Temperatursensor (15, 17), der an einem Rohr (3, 7) installiert werden kann, um eine Fluidtemperatur zu bestimmen, und
    - einen Rechner (11), der eingerichtet ist, um Messwerte von einem Durchflusssensor (13) und/oder einem Temperatursensor (15, 17) zu erhalten und zu verarbeiten, um den Wärmeenergieverbrauch zu bestimmen,

umfasst.

9. Verfahren nach Anspruch 7 oder 8, ferner umfassend ein automatisches wenigstens einmaliges oder regelmäßiges Prüfen durch einen Handshake-Mechanismus (305, 307), ob die Kommunikation in dem erweiterten Kommunikationsmodus (DIG) fehlerfrei ist.

10. Verfahren nach einem der Ansprüche 7 bis 9, wobei der Standardkommunikationsmodus (ANA) ein analoger Impulssignalmodus ist und der erweiterte Kommunikationsmodus (DIG) ein digitaler serieller Kommunikationsmodus ist.

**Revendications**

1. Composant séparable (11,13,15,17) d'un compteur d'énergie thermique (9) pour déterminer la consommation d'énergie thermique fournie par un écoulement de fluide à travers un tuyau (3, 7), le composant séparable (11,13,15,17) comprenant une interface de communication et pouvant être connecté de manière amovible par câble (19,21,23) à un autre composant (11,13,15,17) du compteur d'énergie thermique (9), **caractérisé en ce que** l'interface de communication est configurée pour communiquer sélectivement avec ledit autre composant (11,13,15,17) dans un mode de communication par défaut (ANA) et un mode de communication avancé (DIG), dans lequel l'interface de communication est configurée pour

   - commencer à communiquer avec ledit autre composant (11,13,15,177) dans le mode de communication par défaut (ANA), et
   - tenter automatiquement, au moins une fois ou régulièrement, de passer du mode de communication par défaut (ANA) au mode de communication avancé (DIG) et
   - revenir automatiquement au mode de communication par défaut (ANA) si la communication en mode de communication avancé (DIG) est défectueuse.

2. Composant séparable (11,13,15,17) selon la revendication 1, dans lequel le composant séparable (11,13,15,17) fait partie d'un groupe comprenant :

   - un capteur de débit (13) pouvant être installé sur un tuyau (3, 7) pour déterminer un débit de fluide,
   - un capteur de température (15,17) pouvant être installé sur un tuyau (3, 7) pour déterminer une température de fluide et
   - un calculateur (11) configuré pour recevoir et traiter des valeurs de mesure provenant d'un capteur de débit (13) et/ou d'un capteur de température (15,17) pour déterminer une consommation d'énergie thermique.

3. Composant séparable (11,13,15,17) selon une quelconque des revendications précédentes, dans lequel l'interface de communication est configurée pour vérifier automatiquement, au moins une fois ou régulièrement, par un mécanisme de prise de contact (305, 307) si la communication dans le mode de communication avancé (DIG) est sans défaut.

4. Composant séparable (11,13,15,17) selon une quelconque des revendications précédentes, dans lequel le mode de communication par défaut (ANA) est un mode de signal pulsé analogique et le mode de communication avancé (DIG) est un mode de communication série numérique.

5. Composant séparable (11) selon une quelconque des revendications précédentes, dans lequel le composant séparable est un calculateur (11) d'un compteur d'énergie thermique (9), le calculateur (11) étant configuré pour recevoir et traiter des valeurs de mesure provenant d'autres composants (13,15,17) du compteur d'énergie thermique (9), les autres composants étant un capteur de débit (13), un premier capteur de température (15) et un deuxième capteur de température (17).

6. Compteur d'énergie thermique (9) comprenant au moins deux composants séparables différents (11,13,15,17) selon une quelconque des revendications précédentes.

7. Procédé de détermination d'une consommation d'énergie thermique fournie par un écoulement de fluide à travers un tuyau (3, 7) à l'aide d'un compteur d'énergie thermique (9), le procédé comprenant :

   - la connexion réversible par câble (19,21,23) d'un premier composant séparable (11,13,15,17) du compteur d'énergie thermique (9) à un deuxième composant séparable (11,13,15,17) du compteur d'énergie thermique (9), et
   - la communication sélective entre le premier composant (11,13,15,17) et le deuxième composant (11,13,15,17) dans un mode de communication par défaut (ANA) et un mode de communication avancé (DIG),
   - le début de la communication entre le premier composant (11,13,15,17) et le deuxième composant (11,13,15,17) dans la communication par défaut (ANA),
   - la tentative automatique, au moins une fois ou régulièrement, de passer du mode de communication par défaut (ANA) au mode de communication avancé (DIG), et
   - le retour automatique au mode de communication par défaut (ANA) si la communication dans le mode de communication avancé (DIG) est défectueuse.

8. Procédé selon la revendication 7, dans lequel le premier composant (11, 13, 15, 17) et le deuxième composant (11, 13, 15, 17) font tous deux partie du groupe comprenant :

   - un capteur de débit (13) pouvant être installé sur un tuyau (3, 7) pour déterminer un débit de fluide,
   - un capteur de température (15, 17) pouvant être installé sur un tuyau (3, 7) pour déterminer une température de fluide et

- un calculateur (11) configuré pour recevoir et traiter des valeurs de mesure provenant d'un capteur de débit (13) et/ou d'un capteur de température (15, 17) pour déterminer la consommation d'énergie thermique.

9. Procédé selon la revendication 7 ou 8, comprenant en outre la vérification automatique, au moins une fois ou régulièrement, par un mécanisme de prise de contact (305, 307) si la communication dans le mode de communication avancé (DIG) est sans défaut.

10. Procédé selon une quelconque des revendications 7 à 9, dans lequel le mode de communication par défaut (ANA) est un mode de signal pulsé analogique et le mode de communication avancé (DIG) est un mode de communication en mode série numérique.

Fig. 1

Fig. 2a

Fig. 2b

Fig. 2c

Fig. 2d

Fig. 2e

Fig. 2f

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2994724 B1

- US 20140241399 A1